# EUROPÄISCHE PATENTSCHRIFT

(11) **EP 1 855 909 B1**
(45) Veröffentlichungstag und Bekanntmachung des Hinweises auf die Patenterteilung: **15.11.2017**
(21) Anmeldenummer: 06706223.2
(22) Anmeldetag: 13.01.2006
(51) Int. Cl.: B60L 5/00

(54) **ANLAGE UND VERFAHREN ZUR BESTIMMUNG EINER POSITION**
SYSTEM AND METHOD FOR DETERMINING A POSITION
INSTALLATION ET PROCÉDÉ POUR DÉTERMINER UNE POSITION

(30) Priorität: 23.02.2005 DE 102005008555
(43) Veröffentlichungstag der Anmeldung: 21.11.2007
(73) Patentinhaber: SEW-EURODRIVE GmbH & Co. KG, 76646 Bruchsal (DE)
(72) Erfinder: SCHMIDT, Josef, 76676 Graben-Neudorf (DE)
(74) Vertreter: Tüngler, Eberhard
(86) Internationale Anmeldenummer: PCT/EP2006/000261
(87) Internationale Veröffentlichungsnummer: WO 2006/089596

(56) Entgegenhaltungen:
- WO-A-03/026915
- US-A- 5 055 638
- US-A- 6 089 512
- US-B1- 6 499 701

## Beschreibung

Die Erfindung betrifft eine Anlage und ein Verfahren zur Bestimmung einer Position.

Aus der DE 197 35 624 C1 ist ein Verfahren bekannt zur berührungslosen Energieübertragung elektrischer Leistung aus einer Mittelfrequenzstromquelle mit einer Mittelfrequenz f_{M} auf einen oder mehrere bewegte Verbraucher über eine Übertragungsstrecke und aus den bewegten Verbrauchern zugeordneten Übertragerköpfen mit nachgeschaltetem Anpasssteller zum Einstellen der von der Übertragungsstrecke aufgenommenen Leistung, wobei die Übertragungsstrecke von der Mittelfrequenzstromquelle mit einem während der Leistungsübertragung in seinem Effektivwert konstanten Mittelfrequenzstrom gespeist wird.

Der Anpasssteller wandelt den aus dem Übertragerkopf eingeprägten mittelfrequenten Strom in eine Gleichspannung. Wie in den Figuren 3, 7a und 7b und zugehöriger Beschreibung der DE 197 35 624 C1 beschrieben, wird der Schalter T_{S} synchron zum Verlauf und mit der doppelten Frequenz des Eingangsstroms des Anpassstellers betrieben. Ein erheblicher Nachteil ist jedoch, dass diese hohe Schaltfrequenz 2 f_{M} hohe Schaltverluste zur Folge hat. Ein weiterer Nachteil ist, dass sich das synchrone Prinzip nicht mehr aufrecht erhalten lässt bei Verwendung mehrerer asynchron arbeitender Einspeisungen zur Versorgung eines Anpassstellers.

Aus der DE 100 53 373 A1 ist ein Verfahren bekannt, das im Gegensatz zur DE 197 35 624 C1 asynchron betrieben wird und geringere Schaltverluste aufweist.

Der Übertragerkopf wird oft auch als Pick-Up bezeichnet und ist an einen Anpasssteller angeschlossen ist, welcher eine Versorgungsspannung für eine Last zur Verfügung stellt, wie beispielsweise des Antrieb des bewegbaren Fahrwagens.

Aus der EP 0 961 743 B1 ist ein Transportsystem bekannt, bei dem gemäß Spalte 6, Absatz [0020] die Informationsübertragung zwischen einer festen Station, einem Satellitenfahrzeug und einem Trägerfahrzeug über Funk vorgesehen ist. Nachteiligerweise ist die Funkübertragung allerdings nur dann verwendbar, wenn keine Reflexionen oder toten Winkel für die Funkwellen vorhanden sind. Alternativ wird ein geschlitztes Koaxialkabel vorgeschlagen, was aufwendig und kostspielig bei der Verlegung innerhalb der Anlage ist. Außerdem benötigt die notwendige Patch-Antenne Bauraum.

**Aus der** US 6 499 701 B1 **ist als nächstliegender Stand der Technik ein System zur induktiven Energieübertragung mit Positionserkennung zur Bahnführung eines Fahrzeugs bekannt.**

**Aus der** US 5 055 638 A **ist eine Daten- und Energieübertragungseinrichtung für Fördersysteme bekannt.**

**Aus der** WO 03/026915 A **ist eine Elektrohängebahn mit berührungsloser Energie- und Datenübertragung bekannt.**

**Aus der** US 6 089 512 A **ist ein spurgeführtes Transportsystem bekannt.**

Der Erfindung liegt daher die Aufgabe zugrunde, ein die Position von Fahrzeugen zu bestimmen innerhalb einer Anlage.

Erfindungsgemäß wird die Aufgabe **bei dem Verfahren nach den in Anspruch 1 und bei der Anlage nach den in Anspruch 11** angegebenen Merkmalen gelöst.

**Wichtige** Merkmale der Erfindung bei der Anlage sind, dass sie einen stationären Teil und relativ dazu bewegbare Fahrzeuge, die zumindest eine elektronische Schaltung umfassen, umfasst,
wobei das Fahrzeug entlang einem vom stationären Teil umfassten Linienleiter bewegbar ist, insbesondere mittels Schienen,
wobei das Fahrzeug zumindest ein Koppelelement umfasst, über welches mindestens zwei verschieden frequente Wechselströme und/oder Wechselspannungen auskoppelbar sind, die von einer stationären elektronischen Schaltung in den Linienleiter oder in einen entlang dem Linienleiter verlegten Koaxialleiter einspeisbar sind,
wobei Mittel zur Bestimmung der Position vorgesehen sind, die Mittel zur Bestimmung der Amplituden und/oder Phasen der ausgekoppelten Wechselstromanteile und/oder deren Verhältnis umfassen.

Von Vorteil ist dabei, dass zwei verschieden frequente Wechselstromanteile auskoppelbar sind. Somit ist deren Amplitude und Phase, insbesondere sogar relativ zueinander, bestimmbar. Die beiden Frequenzen sind synchronisiert verwendbar. Auf diese Weise ist die relative Phasenlage der beiden eine wichtige Informationsquelle zur Positionsbestimmung. Das Verhältnis der Amplituden ist charakteristisch für die Position in der Anlage, da die Amplituden je nach Position eine andere Dämpfung aufweisen. Für verschiedene Frequenzen ist die Dämpfung innerhalb der Anlage verschieden. Außerdem ist bei jeder Position ein anderer Absolutwert der Amplitude vorhanden.

Der überraschende Vorteil der Erfindung ist, dass quasi die gesamte Anlage an jeder Position ein eindeutig identifizierbares Wertepaar, ein Wert oder Wertetupel der Amplituden, Phasen, Amplitudenverhältnisse und/oder Phasenverhältnisse aufweist. Auf diese Weise ist dann durch Bestimmung dieser Werte, Wertepaare oder Wertetupel ein Rückschluss auf die Position innerhalb der Anlage ermöglicht ist.

Bei einer vorteilhaften Ausgestaltung sind die Fahrzeuge aus dem Linienleiter berührungslos versorgbar, insbesondere wobei die Fahrzeuge einen induktiv mit dem Linienleiter gekoppelten Übertragerkopf umfassen. Von Vorteil ist dabei, dass das Fahrzeug induktiv versorgbar ist. Somit ist über diese berührungslose Koppelung nicht nur die Energie sondern auch die Information übertragbar, wobei die Frequenzen der Informationsübertragung zusätzlich zu Zwecken der Positionsbestimmung verwendbar sind. Dazu ist die Koppeleinheit in mehreren Komponenten ausführbar, wie beispielsweise ein Übertragerkopf und ein geschlitztes Koaxleiterkabel, oder in einer Komponente, wie beispielsweise durch einen einzigen Übertragerkopf, dessen sekundärseitig abgegriffener Strom einer Filterung unterworfen wird, die die hochfrequenten Anteile herausfiltert und den Mitteln zur Positionsbestimmung zuleitet. Im letztgenannten Fall sind die höher frequenten Anteile auf den Primärstrom im Linienleiter aufmoduliert, Darüber hinaus kann der Übertragerkopf auch mehrere Wicklungen umfassen, die für die verschiedenen elektronischen Schaltungskomponenten separat genutzt werden, wie beispielsweise Leistungselektronik und Signalelektronik. Bei Verwendung der obengenannten Koaxialleiter ist ein Aufmodulieren der höherfrequenten Anteile auf den Primärstrom nicht notwendig sondern die höherfrequenten Anteile werden nur über den Koaxialleiter übertragen. Hierzu weist das Koppelelement dann selbstverständlich eine Empfangsvorrichtung auf, die im Nahfeldbereich des geschlitzten Koaxialleiters entlang geführt wird. Für die Leistungsübertragung ist der Übertragerkopf dabei mit Starkstromleitungen ausgeführt.

Bei einer vorteilhaften Ausgestaltung sind der Linienleiter und das Koppelelement induktiv und/oder kapazitiv gekoppelt. Von Vorteil ist dabei, dass die Koppelung nur schwach ausgeführt sein muss, weil die sekundärseitige elektronische Schaltung einen das Koppelelement umfassenden Resonanzkreis umfasst, der trotz der schwachen Kopplung einen hohen Wirkungsgrad der Energieübertragung ermöglicht.

Bei einer vorteilhaften Ausgestaltung umfasst die elektronische Schaltung des Fahrzeuges einen Speicher. Von Vorteil ist dabei, dass eine umfangreiche Menge an Positionen mit den zugehörigen phasen- und/oder amplitudenbezogenen Werten abspeicherbar ist.

Bei einer vorteilhaften Ausgestaltung umfasst die stationäre elektronische Schaltung einen Speicher. Von Vorteil ist dabei, dass die genannten Daten auch stationär abspeicherbar sind und somit von allen Fahrzeugen abrufbar sind.

Wesentliche Merkmale bei dem Verfahren zur Bestimmung einer Position eines Fahrzeuges in einer Anlage, sind, dass die Anlage einen stationären Teil und relativ dazu bewegbare Fahrzeuge umfasst, welche jeweils zumindest eine elektronische Schaltung umfassen,
wobei das Fahrzeug entlang einem vom stationären Teil umfassten Linienleiter bewegbar ist, insbesondere auf Schienen,
wobei das Fahrzeug zumindest ein Koppelelement umfasst, über welches mindestens zwei verschieden frequente Wechselströme und/oder Wechselspannungen aus dem Linienleiter auskoppelbar sind, die von einer elektronischen Schaltung in den Linienleiter einspeisbar sind,
- wobei, insbesondere während des Betriebs der Anlage, Amplituden und/oder Phasen der ausgekoppelten Wechselstromanteile und/oder deren Verhältnis bestimmt wird,
- aus diesen so bestimmten Werten die Position des Fahrzeuges bestimmt wird.
Insbesondere wird
- mindestens ein Fahrzeug, insbesondere bei Inbetriebnahme der Anlage, in der Anlage über **ausgewählte Positionen** gefahren,
- die zu den Positionen zugehörigen Amplituden und/oder Phasen der ausgekoppelten Wechselstromanteile und/oder deren Verhältnis werden bestimmt und
- **als erste Werte** zusammen mit den ausgewählten Positionen abgespeichert in einem Speicher der elektronischen Schaltung des Fahrzeuges und/oder einem Speicher der stationären elektronischen Schaltung, insbesondere als Tabelle,
- wobei, insbesondere während des Betriebs der Anlage, Amplituden und/oder Phasen der ausgekoppelten Wechselstromanteile und/oder deren Verhältnis bestimmt werden **als zweite Werte,**
- und es wird aus den zweiten Werten unter Verwenden der ersten Werte die jeweilige zu den zweiten Werten Position des Fahrzeuges bestimmt.

Von Vorteil ist dabei, dass bei Inbetriebnahme die Anlage sozusagen vermessen wird und die gemessenen Daten abgelegt werden. Dass diese Daten der Position in eineindeutiger Weise zuordenbar sind, ist eine überraschende Erkenntnis der Erfindung, die nun dazu auch noch verwendet wird, die Position des Fahrzeuges zu bestimmen. Dabei ist sogar ein sowieso schon zur Datenübertragung vorhandener Informations-Kanal nutzbar. Es sind also innerhalb der Anlage entlang der Strecke dann keine weiteren Maßnahmen oder Mittel notwendig.

Bei einer vorteilhaften Ausgestaltung wird zur Energieversorgung des Fahrzeuges die Einspeisung einen mittelfrequenten Wechselstrom in den Linienleiter einprägt, insbesondere mit 25kHz. Von Vorteil ist dabei, dass eine Mittelfrequenz, insbesondere eine Mittelfrequenz von weniger als 100 kHz nutzbar ist für die Energieversorgung. Insbesondere ist der mittelfrequente Strom synchronisiert betreibbar mit den höher frequenten Anteilen zur Datenübertragung und/oder Positionsbestimmung.

Bei einer vorteilhaften Ausgestaltung werden Extrapolationen zwischen den ersten Werten ausgeführt, insbesondere zur genaueren Bestimmung der Position. Von Vorteil ist dabei, dass eine noch feinere Bestimmung ermöglicht ist.

Bei einer vorteilhaften Ausgestaltung werden mehrere Frequenzen verwendet. Von Vorteil ist dabei, dass Mehrdeutigkeiten reduzierbar sind. Die eineindeutige Zuordnung und die Messgenauigkeit lässt sich mittels Verwendung von mehreren Frequenzen erhöhen.

Bei einer vorteilhaften Ausgestaltung sind die verschieden frequenten Wechselströme und/oder Wechselspannungen synchronisiert zu demjenigen mittelfrequenten Wechselstromanteil, welcher zur Energieversorgung des Fahrzeuges verwendet wird. Von Vorteil ist dabei, dass die Wechselanteile zur Positionsbestimmung in Zeitbereichen abgesendet werden können, in welchen der mittelfrequente Anteil die geringsten Störungen aufweist. Insbesondere werden die verschieden frequenten Wechselströme und/oder Wechselspannungen von der Einspeisung als Wellenzüge erzeugt, welche bei Nulldurchgang des mittelfrequenten Wechselstromanteils starten. Von Vorteil ist dabei, dass die von der Leistungsübertragung generierten Störungen minimierbar sind. Statt des Nulldurchgangs kann der Fachmann auch andere Zeitbereiche verwenden, in denen keine Störungen oder nur wenig Störpegel zu erwarten ist.

Bei einer vorteilhaften Ausgestaltung weist der mittelfrequente Wechselstromanteil eine Frequenz auf, die zwischen 15kHz und 100kHz liegt, insbesondere vorzugsweise bei 25kHz. Von Vorteil ist dabei, dass hierzu IGBT als elektronische Leistungsschalter verwendbar sind und ein hoher Wirkungsgrad der Energieübertragung erzielbar ist.

Bei einer vorteilhaften Ausgestaltung weisen die verschieden frequenten Wechselströme und/oder Wechselspannungen eine Frequenz von mehr als 100kHz auf. Von Vorteil ist dabei, dass der Störpegel geringer ist und die Messgenauigkeit höher wird. Somit sinkt auch die Ungenauigkeit der Positionsbestimmung. Insbesondere bei Verwendung von Frequenzen, die zwischen 1 MHz und 100 GHz liegen, insbesondere vorzugsweise zwischen 1 und 10 GHz, ist vorteiligerweise die Positionsbestimmung sehr genau ausführbar.

Bei einer vorteilhaften Ausgestaltung hat die Anlage nur eine derartige Größe und die Frequenzen sind derart gewählt, dass zu jeder Position zumindest das Wertepaar der Phasen jeweils eineindeutig zuordenbar ist.

Bei der vorliegenden Erfindung handelt es sich bei der Positionsbestimmung immer um Bestimmung einer Position entlang der Strecke, also Fahrwegs, in der Anlage. Insbesondere für schienengebundene Anwendungen geht es um die Bestimmung der Schienenposition des Fahrzeuges.

Weitere Vorteile ergeben sich aus den Unteransprüchen.

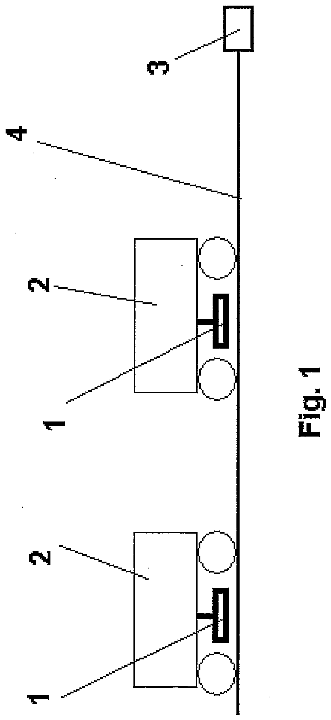

Die Erfindung wird nun anhand von Figur 1 näher erläutert:
Die Erfindung ist für Systeme zur berührungslosen Energieübertragung, wie im Stand der Technik dargestellt, als vorteilhafte Weiterbildung vorgesehen. Insbesondere gibt es einen nicht-beweglichen Teil (3,4) der Anlage und bewegbare Teile (1,2), die auf Schienen oder ohne Schienen ausgeführt sind. Vorteiligerweise haben diese bewegbaren Teile, also Fahrzeuge, einen Antrieb.

Am Fahrzeug ist zumindest ein Übertragerkopf vorgesehen, der mindestens eine Wicklung umfasst. Der nicht-bewegliche Teil des Systems umfasst als Primärleitung zumindest einen langgestreckten Linienleiter und eine Rückleitung. Die Rückleitung ist entweder in einem metallischen Profil, Schienenprofil oder auch als Linienleiter ausführbar. Der Übertragerkopf ist induktiv gekoppelt an den oder die Linienleiter. Wenn die Rückleitung in einem Profil erfolgt, ist der Übertragerkopf derart ausgeführt, dass zumindest sein Ferritkern den linienhaften Hinleiter zumindest teilweise umgibt. Der Übertragerkopf ist demgemäß U-förmig oder C-förmig ausgeführt. Die Sekundärwicklung, also die Wicklung des Übertragerkopfes, ist um die Schenkel des U oder C herum ausgeführt. Wenn die Rückleitung als Linienleiter ausgeführt ist, ist der Ferritkern vorteiligerweise als E-förmiger Kern auszuführen, wobei die beiden Leitungen, also Hinleiter und Rückleiter, zwischen den Schenkeln des E angeordnet sind oder in Schenkelrichtung ein wenig von dieser Position beabstandet sind.

Für die Erfindung besonders wesentlich ist, dass eine weitere berührungslose elektromagnetische Übertragung entlang der Strecke vorgesehen ist. Dazu gibt es verschiedene erfindungsgemäße Ausführungsvarianten.

**In erster Variante** wird neben dem Linienleiter, also im Wesentlichen parallel zu diesem, ein **Koaxialleiter** verlegt, der Ausnehmungen in seinem Schirmleiter aufweist. Die Ausnehmungen können beispielsweise ein axiale Längsschlitze sein oder Querschlitze. Die Fahrzeuge weisen eine Empfangsvorrichtung auf, deren Antenne im Bereich der aus dem Koaxialkabel austretenden Strahlung entlang geführt wird.

**In zweiter Variante** wird auf dem Linienleiter eine weitere Frequenz **aufmoduliert.** Die Übertragung der eigentlichen Leistung erfolgt mit einer Mittelfrequenz von beispielsweise 25 kHz. Es sind aber auch andere Frequenzen zwischen 10 kHz bis 50 kHz verwendbar. Idealerweise ist der in den Linienleiter von einer Einspeisung eingeprägte Strom sinusförmig. Vorzugsweise weist der Strom eine konstante Frequenz auf. Die Übertragung weiterer Frequenzen erfolgt dann in höherfrequenten Frequenzbändern, wie beispielsweise MHz- oder GHz-Bereichen. Die Fahrzeuge weisen eine Empfangsvorrichtung auf, die aus dem Pick-Up höherfrequente Anteile herausfiltert. Alternativ ist aber auch eine separate Antenne für die höher frequenten Anteile vorsehbar.

Wesentlich ist bei der Erfindung, dass zur berührungslosen Informationsübertragung zwischen einer festen Station, also einer Einspeisung 3, dem Fahrzeug 2 auf die Primärleiter und/oder den Primärkreis höherfrequent aufmodulierte Ströme vorgesehen sind. Dazu ist die feste Station und das Fahrzeug mit mindestens einer Koppeleinheit 1 zum Ein- und/oder Auskoppeln der höherfrequenten Ströme ausgestattet.

Vereinfachend wird in der vorliegenden Schrift teilweise von "Frequenzen" auch dann gesprochen, wenn Wechselströme und/oder Wechselspannungen mit einer Frequenz oder mehreren Frequenzanteilen gemeint sind.

In beiden Varianten wird eine Positionsbestimmung erfindungsgemäß folgendermaßen ausgeführt:
Der Access Point 3, also eine elektronische Schaltung, speist die Linienleiterstrecke 4 mit mindestens zwei Frequenzen. Der Wechselstrom im Primärleiter weist also mindestens zwei verschiedene Frequenzanteile auf. Jedes Fahrzeug empfängt mittels des Koppelelementes 1 beide Frequenzen und kann zumindest die Amplitude beider Frequenzen bestimmen. Bei Inbetriebnahme der Anlage werden nun die Fahrzeuge entlang des Linienleiters in der ganzen Anlage verfahren und die Amplituden an ausgewählten Positionen bestimmt. In einem Speicher des Fahrzeugs wird eine Tabelle hinterlegt, bei der jeder Position zumindest ein Amplitudenverhältnis zugeordnet wird.

Während des Betriebs bestimmt die elektronische Schaltung des Fahrzeugs, also die Fahrzeugsteuerung, die Position des Fahrzeugs aus den ermittelten Amplitudenverhältnissen. Es ist der Steuerung sogar möglich, mittels einer Extrapolation die Position des Fahrzeuges zwischen den bei Inbetriebnahme wohldefinierten ausgewählten Positionen abzuschätzen.

In weiteren erfindungsgemäßen Ausführungsbeispielen sind sehr viele ausgewählte Positionen vorsehbar. Somit ist eine Feinbestimmung der Position möglich.

In weiteren erfindungsgemäßen Ausführungsbeispielen wird der Einfluss der Anzahl der Fahrzeuge auf die Tabellenwerte mitberücksichtigt. Dadurch kann der Einfluss der Erhöhung der Anzahl von Koppelelementen innerhalb der Anlage und die damit veränderte Dispersion berücksichtigt werden.

In weiteren erfindungsgemäßen Ausführungsbeispielen wird nicht nur das Amplitudenverhältnis sondern zusätzlich das Phasenverhältnis berücksichtigt. Somit ist die Tabelle noch detaillierter und die Positionsbestimmung noch genauer ausführbar. Mehrdeutigkeiten bei der Positionsermittelung während des Betriebes sind vermeidbar.

In weiteren erfindungsgemäßen Ausführungsbeispielen ist das Aussenden der beiden Frequenzen synchronisiert auf den Nulldurchgang des mittelfrequenten Primärstromes. Auf diese Weise ist ein Zeitbereich gewählt, in welchem die Störsignale möglichst klein sind. Daher ist die Positionsbestimmung sehr genau.

Vorteiligerweise ist somit über den Primärkreis, die Primärleiter und die Übertragerköpfe nicht nur der mittelfrequente Strom zur Energieübertragung sondern auch der höher als mittelfrequente aufmodulierte Strom zur Datenübertragung vorsehbar. Bei einer Mittelfrequenz von 15 bis 50 kHz zur Energieübertragung ist für die Informationsübertragung ein Strom von mehr als 100kHz vorteilhaft. Es können aber auch Frequenzen aus dem MHz oder GHz-Bereich verwendet werden bei Berücksichtigung der Baugröße, Konstruktionsweise und Auslegung der gesamten Anlage.

Die Koppeleinheiten 1 können vorwiegend induktiv oder vorwiegend kapazitiv ausgelegt sein. Beispielsweise kann am Übertragerkopf ein Hochpassfilter elektrisch angeschlossen sein zum Abtrennen der höherfrequenten Stromanteile, also zum Abtrennen eines aufmodulierten Stromanteils.

Vorteiligerweise ist kein Koaxialkabel in der Strecke notwendig. Weiter vorteilig ist, dass bei jeder Geometrie der Anlage die Informationsübertragung sicher ausführbar ist, da die aufmodulierten Ströme von den Gegenständen der Umgebung im Wesentlichen unbeeinflusst sind - im Gegensatz zur Funkübertragung.

Weiter ist ein wesentlicher Vorteil, dass zur Realisierung der berührungslosen Informationsübertragung keine zusätzlichen Bauteile innerhalb der Strecke vorzusehen sind. Denn die Übertragungsköpfe sind induktiv an die Primär-Komponenten ankoppelbar und somit auch geeignet zum berührungslosen Übertragen der aufmodulierten Stromanteile.

### Bezugszeichenliste

1 Koppelelement
2 Fahrzeug
3 Access Point, Einspeisung
4 Linienleiter

## Patentansprüche

1. Verfahren zur Bestimmung einer Position eines Fahrzeuges in einer Anlage,
die einen stationären Teil und relativ dazu bewegbare Fahrzeuge umfasst, welche jeweils zumindest eine elektronische Schaltung umfassen,
wobei das Fahrzeug entlang einem vom stationären Teil umfassten Linienleiter bewegbar ist, insbesondere auf Schienen,
wobei das Fahrzeug zumindest ein Koppelelement umfasst, über welches mindestens zwei verschieden frequente Wechselströme und/oder Wechselspannungen aus dem Linienleiter oder einem entlang dem Linienleiter verlegten Koaxialleiter auskoppelbar sind, die von einer elektronischen Schaltung in den Linienleiter oder den Koaxialleiter einspeisbar sind,
**dadurch gekennzeichnet, dass**
- während des Betriebs der Anlage, Amplituden und Phasen der ausgekoppelten Wechselstromanteile und/oder deren Verhältnis bestimmt wird,
- aus diesen so bestimmten Werten die Position des Fahrzeuges bestimmt wird,
- wobei mindestens ein Fahrzeug, bei Inbetriebnahme der Anlage, in der Anlage über ausgewählte Positionen gefahren wird,
- wobei die zu den Positionen zugehörigen Amplituden und/oder Phasen der ausgekoppelten Wechselstromanteile und/oder deren Verhältnis bestimmt werden und
- als erste Werte zusammen mit den ausgewählten Positionen abgespeichert werden in einem Speicher der elektronischen Schaltung des Fahrzeuges und/oder einem Speicher der stationären elektronischen Schaltung, insbesondere als Tabelle,
- wobei, während des Betriebs der Anlage, Amplituden und/oder Phasen der ausgekoppelten Wechselstromanteile und/oder deren Verhältnis bestimmt werden als zweite Werte,
- wobei aus den zweiten Werten unter Verwenden der ersten Werte die Position des Fahrzeuges bestimmt wird.

2. Verfahren nach Anspruch 1,
**dadurch gekennzeichnet, dass**
zur Energieversorgung des Fahrzeuges die Einspeisung einen mittelfrequenten Wechselstrom in den Linienleiter einprägt, insbesondere mit 25kHz.

3. Verfahren nach mindestens einem der vorangegangenen Ansprüche,
**dadurch gekennzeichnet, dass**
Extrapolationen zwischen den ersten Werten ausgeführt werden, insbesondere zur genaueren Bestimmung der Position.

4. Verfahren nach mindestens einem der vorangegangenen Ansprüche,
**dadurch gekennzeichnet, dass**
mehrere Frequenzen verwendet werden.

5. Verfahren nach mindestens einem der vorangegangenen Ansprüche,
**dadurch gekennzeichnet, dass**
die verschieden frequenten Wechselströme und/oder Wechselspannungen synchronisiert zu demjenigen mittelfrequenten Wechselstromanteil sind, welcher zur Energieversorgung des Fahrzeuges verwendet wird.

6. Verfahren nach mindestens einem der vorangegangenen Ansprüche,
**dadurch gekennzeichnet, dass**
die verschieden frequenten Wechselströme und/oder Wechselspannungen von der Einspeisung als Wellenzüge erzeugt werden, die bei Nulldurchgang des mittelfrequenten Wechselstromanteils starten.

7. Verfahren nach mindestens einem der vorangegangenen Ansprüche,
**dadurch gekennzeichnet, dass**
der mittelfrequente Wechselstromanteil eine Frequenz aufweist, die zwischen 15kHz und 100kHz liegt, insbesondere vorzugsweise bei 25kHz.

8. Verfahren nach mindestens einem der vorangegangenen Ansprüche,
**dadurch gekennzeichnet, dass**
die verschieden frequenten Wechselströme und/oder Wechselspannungen eine Frequenz von mehr als 100kHz aufweisen.

9. Verfahren nach mindestens einem der vorangegangenen Ansprüche,
**dadurch gekennzeichnet, dass**
die verschieden frequenten Wechselströme und/oder Wechselspannungen eine Frequenz aufweisen, die zwischen 1 MHz und 100 GHz liegt, insbesondere vorzugsweise zwischen 1 und 10 GHz.

10. Verfahren nach mindestens einem der vorangegangenen Ansprüche,
**dadurch gekennzeichnet, dass**
die Anlage nur eine derartige Größe hat und die Frequenzen derart gewählt sind, dass zu jeder Position zumindest das Wertepaar der Phasen jeweils eineindeutig zuordenbar ist.

11. Anlage, umfassend einen stationären Teil und relativ dazu bewegbare Fahrzeuge, die zumindest eine elektronische Schaltung umfassen, wobei das Fahrzeug entlang einem vom stationären Teil umfassten Linienleiter bewegbar ist, insbesondere mittels Schienen,
wobei das Fahrzeug zumindest ein Koppelelement umfasst, über welches mindestens zwei verschieden frequente Wechselströme und/oder Wechselspannungen auskoppelbar sind, die von einer stationären elektronischen Schaltung in den Linienleiter oder in einen entlang dem Linienleiter verlegten Koaxialleiter einspeisbar sind,
**dadurch gekennzeichnet, dass**
Mittel zur Bestimmung der Position vorgesehen sind, die Mittel zur Bestimmung der Amplituden und/oder Phasen der ausgekoppelten Wechselstromanteile und/oder deren Verhältnis umfassen und dass die Anlage Mittel zur Durchführung eines Verfahrens nach mindestens einem der vorangegangenen Ansprüche umfasst.

12. Anlage nach Anspruch 11,
**dadurch gekennzeichnet, dass**
die Fahrzeuge aus dem Linienleiter berührungslos versorgbar sind, insbesondere wobei die Fahrzeuge einen induktiv mit dem Linienleiter gekoppelten Übertragerkopf umfassen.

13. Anlage nach Anspruch 11 oder 12,
**dadurch gekennzeichnet, dass**
der Linienleiter oder der Koaxialleiter induktiv und/oder kapazitiv gekoppelt sind mit dem Koppelelement.

14. Anlage nach Anspruch 11, 12 oder 13,
**dadurch gekennzeichnet, dass**
die elektronische Schaltung des Fahrzeuges einen Speicher umfasst.

15. Anlage nach Anspruch 11, 12, 14 oder 13,
**dadurch gekennzeichnet, dass**
die stationäre elektronische Schaltung einen Speicher umfasst.

## Claims

1. A method for determining a position of a vehicle in an installation
which comprises a stationary part and vehicles movable relative thereto each of which comprise at least one electronic circuit,
wherein the vehicle is movable along a line conductor comprised by the stationary part, in particular on rails,
wherein the vehicle comprises at least one coupling element via which at least two alternating currents and/or alternating voltages of different frequencies can be decoupled from the line conductor or a coaxial conductor laid along the line conductor, which voltages and/or currents can be fed from an electronic circuit into the line conductor or the coaxial conductor,
**characterised in that**
- during the operation of the installation, amplitudes and phases of the decoupled AC components and/or the ratio thereof is [sic] determined,
- the position of the vehicle is determined from these values thus determined,
- with at least one vehicle, upon starting up the installation, being driven in the installation over selected positions,
- with the amplitudes and/or phases of the decoupled AC components and/or the ratio thereof which are associated with the positions being determined, and
- being stored as first values together with the selected positions in a memory of the electronic circuit of the vehicle and/or in a memory of the stationary electronic circuit, in particular as a table,
- with, during the operation of the installation, amplitudes and/or phases of the decoupled AC components and/or the ratio thereof being determined as second values,
- with the position of the vehicle being determined from the second values using the first values.

2. A method according to Claim 1,
**characterised in that**
in order to supply power to the vehicle, the infeed injects a medium-frequency alternating current into the line conductor, in particular at 25 kHz.

3. A method according to at least one of the preceding claims,
**characterised in that**
extrapolations between the first values are carried out, in particular in order to determine the position more accurately.

4. A method according to at least one of the preceding claims,
**characterised in that**
a plurality of frequencies are used.

5. A method according to at least one of the preceding claims,
**characterised in that**
the alternating currents and/or alternating voltages of different frequencies are synchronised to that medium-frequency AC component which is used to supply power to the vehicle.

6. A method according to at least one of the preceding claims,
**characterised in that**
the alternating currents and/or alternating voltages of different frequencies are generated by the infeed as wave trains which start at the zero crossing of the medium-frequency AC component.

7. A method according to at least one of the preceding claims,
**characterised in that**
the medium-frequency AC component has a frequency which lies between 15 kHz and 100 kHz, in particular preferably at 25 kHz.

8. A method according to at least one of the preceding claims,
**characterised in that**
the alternating currents and/or alternating voltages of different frequencies have a frequency of more than 100 kHz.

9. A method according to at least one of the preceding claims,
**characterised in that**
the alternating currents and/or alternating voltages of different frequencies have a frequency which lies between 1 MHz and 100 GHz, in particular preferably between 1 and 10 GHz.

10. A method according to at least one of the preceding claims,
**characterised in that**
the installation is only of such a size and the frequencies are selected such that at least the pair of values of the phases can be associated in each case in a one-to-one relationship with each position.

11. An installation, comprising a stationary part and vehicles movable relative thereto which comprise at least one electronic circuit
wherein the vehicle is movable along a line conductor comprised by the stationary part, in particular by means of rails,
wherein the vehicle comprises at least one coupling element via which at least two alternating currents and/or alternating voltages of different frequencies can be decoupled, which can be fed from a stationary electronic circuit into the line conductor or into a coaxial conductor laid along the line conductor,
**characterised in that**
means for determining the position are provided which comprise means for determining the amplitudes and/or phases of the decoupled AC components and/or the ratio thereof, and **in that** the installation comprises means for carrying out a method according to at least one of the preceding claims.

12. An installation according to Claim 11,
**characterised in that**
the vehicles can be supplied in contactless manner from the line conductor, in particular with the vehicles comprising a transmitter head coupled inductively to the line conductor.

13. An installation according to Claim 11 or 12,
**characterised in that**
the line conductor or the coaxial conductor is/are coupled inductively and/or capacitively with the coupling element.

14. An installation according to Claim 11, 12 or 13,
**characterised in that**
the electronic circuit of the vehicle comprises a memory.

15. An installation according to Claim 11, 12, 14 or 13,
**characterised in that**
the stationary electronic circuit comprises a memory.

## Revendications

1. Procédé de détermination d'une position d'un véhicule dans une installation qui comprend une partie stationnaire et des véhicules mobiles par rapport à celle-ci, lesquels comprennent chacun au moins un circuit électronique,
le véhicule étant mobile le long d'un conducteur linéaire compris par la partie stationnaire, en particulier sur des rails,
le véhicule comprenant au moins un élément de couplage par l'intermédiaire duquel au moins deux courants alternatifs et/ou tensions alternatives de fréquences différentes, qui peuvent être injectés par un circuit électronique dans le conducteur linéaire ou le conducteur coaxial, peuvent être découplés du conducteur linéaire ou d'un conducteur coaxial posé le long du conducteur linéaire,
**caractérisé en ce que**
- pendant le fonctionnement de l'installation, les amplitudes et phases des composantes de courant alternatif découplées et/ou leur rapport sont déterminés,
- la position du véhicule est déterminée à partir des valeurs ainsi déterminées,
- au moins un véhicule étant amené sur des positions sélectionnées de l'installation lors de la mise en service de l'installation,
- les amplitudes et/ou phases des composantes de courant alternatif découplées associées aux positions et/ou leur rapport sont déterminés et enregistrés en tant que premières valeurs avec les positions sélectionnées dans une mémoire du circuit électronique du véhicule et/ou une mémoire du circuit électronique stationnaire, en particulier sous forme de tableau,
- pendant le fonctionnement de l'installation, les amplitudes et/ou phases des composantes de courant alternatif découplées et/ou leur rapport étant déterminés en tant que deuxièmes valeurs,
- la position du véhicule étant déterminée à partir des deuxièmes valeurs en utilisant les premières valeurs.

2. Procédé selon la revendication 1,
**caractérisé en ce que**
pour l'alimentation en énergie du véhicule, l'alimentation délivre un courant alternatif à moyenne fréquence, en particulier à 25 kHz, dans le conducteur linéaire.

3. Procédé selon au moins l'une des revendications précédentes,
**caractérisé en ce que**
des extrapolations sont effectuées entre les premières valeurs, en particulier pour déterminer plus précisément la position.

4. Procédé selon au moins l'une des revendications précédentes,
**caractérisé en ce que**
plusieurs fréquences sont utilisées.

5. Procédé selon au moins l'une des revendications précédentes,
**caractérisé en ce que**
les courants alternatifs et/ou tensions alternatives de fréquences différentes sont synchronisés sur la composante de courant alternatif à moyenne fréquence qui est utilisée pour l'alimentation en énergie du véhicule.

6. Procédé selon au moins l'une des revendications précédentes,
**caractérisé en ce que**
les courants alternatifs et/ou tensions alternatives de fréquences différentes sont générés par l'alimentation sous la forme de trains d'onde qui démarrent au passage par zéro de la composante de courant alternatif à moyenne fréquence.

7. Procédé selon au moins l'une des revendications précédentes,
**caractérisé en ce que**
la composante de courant alternatif à moyenne fréquence présente une fréquence qui se situe entre 15 kHz et 100 kHz, en particulier de préférence à 25 kHz.

8. Procédé selon au moins l'une des revendications précédentes,
**caractérisé en ce que**
les courants alternatifs et/ou tensions alternatives de fréquences différentes présentent une fréquence supérieure à 100 kHz.

9. Procédé selon au moins l'une des revendications précédentes,
**caractérisé en ce que**
les courants alternatifs et/ou tensions alternatives de fréquences différentes présentent une fréquence qui se situe entre 1 MHz et 100 GHz, en particulier de préférence entre 1 et 10 GHz.

10. Procédé selon au moins l'une des revendications précédentes,
**caractérisé en ce que**
l'installation a seulement une taille telle et les fréquences sont choisies de telle sorte qu'au moins la paire de valeurs des phases puisse être associée chaque fois de manière biunivoque à chaque position.

11. Installation, comprenant une partie stationnaire et des véhicules mobiles par rapport à celle-ci, qui comprennent au moins un circuit électronique,
le véhicule étant mobile le long d'un conducteur linéaire compris par la partie stationnaire, en particulier au moyen de rails,
le véhicule comprenant au moins un élément de couplage par l'intermédiaire duquel au moins deux courants alternatifs et/ou tensions alternatives de fréquences différentes, qui peuvent être injectés par un circuit électronique stationnaire dans le conducteur linéaire ou dans un conducteur coaxial posé le long du conducteur linéaire, peuvent être découplés,
**caractérisé en ce que**
des moyens pour déterminer la position sont prévus, qui comprennent des moyens pour déterminer les amplitudes et/ou phases des composantes de courant alternatif découplées et/ou leur rapport et que l'installation comprend des moyens pour mettre en oeuvre un procédé selon au moins l'une des revendications précédentes.

12. Installation selon la revendication 11,
**caractérisée en ce que**
les véhicules peuvent être alimentés sans contact à partir du conducteur linéaire, en particulier les véhicules comprenant une tête de transmission couplée par induction avec le conducteur linéaire.

13. Installation selon la revendication 11 ou 12,
**caractérisée en ce que**
le conducteur linéaire ou le conducteur coaxial est couplé par induction et/ou de façon capacitive avec l'élément de couplage.

14. Installation selon la revendication 11, 12 ou 13,
**caractérisée en ce que**
le circuit électronique du véhicule comprend une mémoire.

15. Installation selon la revendication 11, 12, 13 ou 14,
**caractérisée en ce que**
le circuit électronique stationnaire comprend une mémoire.
